# EUROPEAN PATENT SPECIFICATION

(11) **EP 4 673 864 B1**
(45) Date of publication and mention of the grant of the patent: **11.11.2026**
(21) Application number: 23718035.1
(22) Date of filing: 28.02.2023
(51) Int. Cl.: G06K 19/07

(54) **AN ELECTRONIC CARRIER WITH A RECTIFIER SYSTEM**
ELEKTRONISCHER TRÄGER MIT GLEICHRICHTERSYSTEM
UN SUPPORT ÉLECTRONIQUE ÉQUIPÉ D'UN SYSTÈME DE REDRESSEUR

(43) Date of publication of application: 07.01.2026
(73) Proprietor: Linxens Holding, 78200 Mantes-la-Jolie (FR)
(72) Inventor: KLEMM, Lars, 01009 Dresden (DE)
(74) Representative: Grünecker Patent- und Rechtsanwälte PartG mbB
(86) International application number: PCT/IB2023/000086
(87) International publication number: WO 2024/180359

(56) References cited:
- US-A1- 2015 333 801
- US-B1- 6 243 013
- US-B2- 8 186 603
- US-B2- 9 601 942

## Description

The present invention refers to an electronic carrier for a smartcard provided with a rectifier system for rectifying an electro-magnetic signal. Furthermore, the present invention refers to an electrical device comprising the rectifying electronic circuit and an electrical load powered up by a rectified electro-magnetic signal. Even furthermore, the present invention refers to a pre-laminated structure for a smartcard and to a card-body for a smartcard comprising the electrical device.

### STATE OF THE ART

OLEDs and other active and passive devices in pre-laminated structures and smartcards usually require external rectifier components to be able to receive harvesting energy from a HF antenna, for example an antenna with a resonance frequency of approximately 13.56 MHz, and to provide a direct current (DC) and DC voltage to the devices.

These solutions are generally based on the use of a diode bridge, i.e. a bridge rectifier circuit of four diodes that is used in the process of converting alternating current (AC) from the input terminals to direct current (DC) with fixed polarity on the output terminals. The input voltage received from the Energy Harvesting (EH) antenna is typically an alternating signal. When the input voltage enters the bridge diode, the negative half-cycle of the AC input signal is reversed, resulting in a positive voltage at the output. As a result, the output polarity will always be the same, regardless of the polarity of the input signal.

An additional capacitor may be added to the bridge rectifier circuit for frequency smoothing. In fact, the single polarity output voltage is a pulsing and not a straight line in nature. Hence, the process of capacitor discharge may be advantageously exploited to further rectify the signal. The use of an electronic circuit comprising four diodes and one capacitor has several disadvantages. First, a diode bridge has an intrinsic energy loss due to the use of diodes with a predefined forward voltage drop. This energy loss is at least twice the forward voltage drop of a single diode, because the input voltage to be rectified needs to pass through two diodes. Moreover, this circuit is typically expensive, because it requires many components.

According to document US 6 243 013 B1, a radio frequency (RF) transponder (tag) known. This RF transponder comprises a first and a second tag antenna for receiving information signals from a base station, tag information receiving electronics, the tag information receiving eletronics rectifying the signals from each of the first and the second antennas in a first and a second voltage generating circuit respectively to produce a first and a second voltage, the tag information receiving electronics connecting the first and the second voltage generating circuits in series to provide a tag voltage substantially higher than the voltage available from either the first or the second voltage generating circuit.

Document US 9 601 942 B2 discloses a wireless power receiver to receive power wirelessly from a wireless power transmitter. This wireless power receiver comprises a first reception coil coupled with a resonant coil to receive a positive AC power from the resonant coil, a first capacitor connected in series to the first reception coil, a first rectifying diode configured to rectify the positive AC power received through the first capacitor, a second reception coil connected to the first reception coil and coupled with the resonant coil to receive a negative AC power from the resonant coil, a second capacitor connected in series to the second reception coil, a second rectifying diode configured to rectify the negative AC power received through the second capacitor, and a smoothing capacitor connected directly to both the first rectifying diode and the second rectifying diode. The wireless power receiver changes a transferring path of the power provided to a load according to a polarity variation of the AC power received through the first and second reception coils. The smoothing capacitor includes a first terminal connected directly to a ground terminal and a second terminal connected directly to the load.

In view of all the challenges depicted above, i.e. the high number of required electronic components and the resulting high costs, smartcards with LEDs or OLEDs or other electrical loads such as batteries are generally very expensive and cannot be produced on a high scale, so as to match the market demands.

### SUMMARY

It is therefore an object of the present invention to provide an electronic carrier for antennas for a smartcard provided with a rectifier system for rectifying an electro-magnetic signal that overcomes one or more of the disadvantages illustrated above. Furthermore, it is an object of the present invention to provide an active device with an electrical load powered up by a rectified electro-magnetic system, which is advantageous over the prior art. Even furthermore, it is an object of the present invention to provide a pre-laminated structure for a smartcard and a smartcard incorporating the rectifying electronic circuit, which are advantageous over the prior art.

The electronic carrier the electrical device, the pre-laminated structure and the card-body for a smartcard according to the present invention are as set-up in the appended claims.

According to the present invention, an electronic carrier for antennas for a smartcard provided with a rectifier system for rectifying an electro-magnetic signal, comprising:
- A first electronic circuit comprising a first wire antenna configured to provide energy to an electrical load and a first diode connected to the first wire antenna, said first diode having a first forward bias; and
- A second electronic circuit comprising a second wire antenna configured to provide energy to the electrical load and a second diode connected to the second wire antenna, said second diode having a second forward bias.

An induced current is generated in the first wire antenna and in the second wire antenna when they are exposed to an alternating magnetic field, and the first diode and the second diode are positioned on the corresponding electronic circuit in such a way that, given a predefined direction of the alternating magnetic field, only one of the first diode or the second diode has a forward bias that allows flowing of the induced current, so that the induced current is allowed to flow alternatively through the first electronic circuit or through the second electronic circuit to provide energy to the electrical load.

The advantage of this configuration is that the two electronic circuits work as a rectifier system that rectifies the induced current generated by the alternating magnetic field. For instance, the induced current generated by the alternating magnetic field may be a sinusoidal signal; the rectifier system of the present invention acts as a module function, so that the output signal is a positive signal that can power up the electrical load. When compared to other rectifier systems known at the state of the art, such as a single diode or a bridge diode, the rectifier system of the present invention reduces energy losses and maximizes the energy provided to the electrical load.

According to a preferred embodiment, the rectifying electronic circuit is an electronic carrier for antennas for a smartcard.

In the present disclosure, the alternating magnetic field refers to a magnetic field whose amplitude varies in time within a predefined period. The reference system of the present disclosure is oriented so that the alternating magnetic field is parallel to one axis, for instance the z-axis, of a Cartesian reference system. The alternating magnetic field is defined so as to change direction with respect to that parallel axis of the Cartesian reference system (e.g. the z-axis) when it oscillates between the positive and the negative phase of the periodic function.

According to the present invention, given a predefined direction of the alternating magnetic field (e.g. a positive direction parallel to the z-axis), an induced current is generated in the first and in the second circuits. Thanks to the configuration (i.e. position and forward bias) of the first and second diodes in the electric carrier of the present invention, the induced current is allowed to flow either through the first electronic circuit or through the second electronic circuit to provide energy to the electrical load.

Given another direction of the alternating magnetic field opposite to the previous one (e.g. a negative direction parallel to the z-axis), an induced current is generated in the first and in the second circuits, said induced current having opposite flowing direction with respect to the previous one. Thanks to the configuration (i.e. position and forward bias) of the first and second diodes in the electric carrier of the present invention, the induced current is allowed to flow either through the first electronic circuit or through the second electronic circuit to provide energy to the electrical load. The electronic circuit that powers up the electrical load in this configuration with the negative direction of the alternating magnetic field is the one that did not contribute to the previous one with the positive direction of the alternating magnetic field.

For instance, if the induced current generated by the component of the alternating magnetic field having a positive direction parallel to the z-axis flows through the first electronic circuit, then the induced current generated by the component of the alternating magnetic field having a negative direction parallel to the z-axis flows through the second electronic circuit, or vice versa. By switching the alternating magnetic field between a positive direction and a second direction, the induced current is allowed to flow alternately through the first electronic circuit and through the second electronic circuit to provide energy to the electrical load. As a result, the output signal generated by the electronic circuits of the present invention will be a rectified signal.

### FIGURES

In the following description, reference is made to the following figures:
**Fig. 1A** schematically illustrates a top view of an electronic carrier comprising two EH antennas with two corresponding diodes according to an embodiment of the present invention, during a step of use.
**Fig. 1B** schematically illustrates a top view of an electronic carrier comprising two EH antennas with two corresponding diodes according to the embodiment of Fig. 1A, during a further step of use.
**Fig. 2A** schematically illustrates an enlarged view of the two diodes connected to the two antennas according to the embodiment of Fig. 1A.
**Fig. 2B** schematically illustrates a detail of the antennas of the embodiment of Fig. 2A.
**Fig. 2C** schematically illustrates an example of an induced current signal according to the present invention.
**Fig. 2D** schematically illustrates an example of the output signal that can be generated with the electronic carrier of Figs. 1A and 1B during usage.
**Fig. 3A** schematically illustrates a top view of an electronic carrier comprising two EH antennas with two corresponding diodes according to another embodiment of the present invention, during a step of use.
**Fig. 3B** schematically illustrates a top view of an electronic carrier comprising two EH antennas with two corresponding diodes according to the embodiment of Fig. 3A, during a further step of use.
**Fig. 3C** schematically illustrates a detail of the antennas of the embodiment of Fig. 3A and 3B.
**Fig. 4A** schematically illustrates a top view of an electronic carrier comprising two EH antennas with two corresponding diodes according to another embodiment of the present invention, during a step of use.
**Fig. 4B** schematically illustrates a top view of an electronic carrier comprising two EH antennas with two corresponding diodes according to the embodiment of Fig. 4A, during a further step of use.
**Fig. 5** schematically illustrates a top view of an electronic carrier comprising two EH antennas with two corresponding diodes and with two corresponding capacitors, according to another embodiment of the present invention.
**Fig. 6** schematically illustrates a three-dimensional view of a card-body for a smartcard according to an embodiment of the present invention.

### DETAILED DESCRIPTION

The present description is presented for purposes of illustration but is not intended to be exhaustive or limited to the disclosed embodiments. The scope of protection of the present disclosure is defined in the appended set of claims. Many modifications and variations will be apparent to those of ordinary skill in the art without departing from the scope of the appended claims.

The embodiments were chosen and described in order to best explain the principles of the disclosure and the practical application, and to enable others of ordinary skill in the art to understand the disclosure for various embodiments with various modifications as are suited to the particular use contemplated. Finally, those fields considered known to the skilled person will not be described to avoid covering in a useless way the described invention.

In the present disclosure, it is to be understood that the terms "top", "bottom", "up", "down", "front", "back", "right", "left", etc., must be interpreted with reference to the enclosed set of figures. However, it is to be understood that, in the context of the present disclosure, there is no preferred orientation of the electronic carrier, the active device, the pre-laminated structure and/or the smart card according to the embodiments described below.

In the following, the present invention is explained with reference to the enclosed figures.

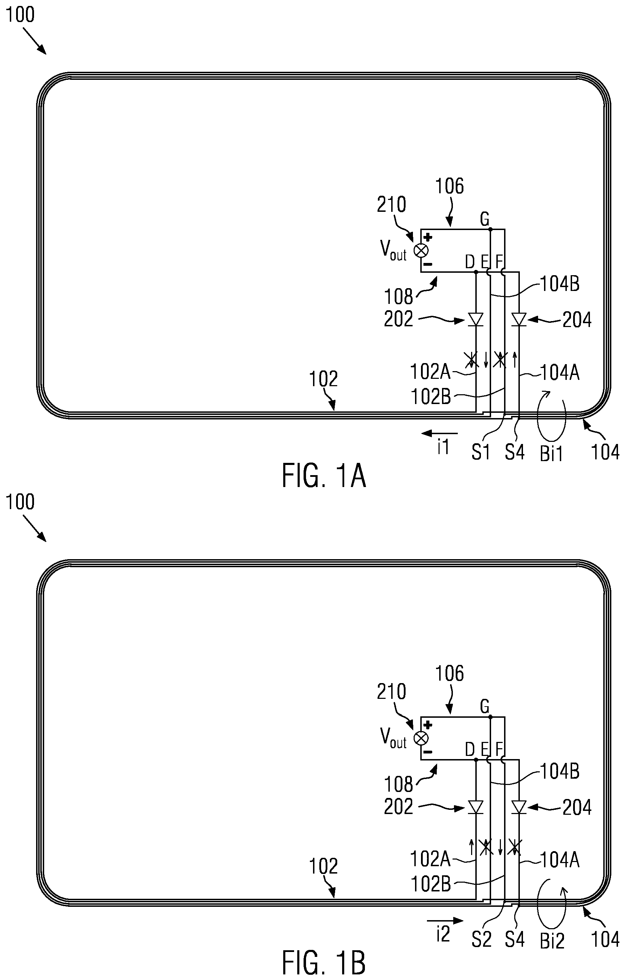

Fig. 1A schematically illustrates a top view of an electronic carrier 100 according to an embodiment of the present invention during a step of use.

According to the invention, two EH antennas 102 and 104 are formed on the electronic carrier 100 for providing energy to an electrical load 210.

The electrical load 210 may be for instance a lighting element, such as a Nano LED stamp, a LED array, a LED light guiding element that includes at least one LED as light source, and/or an Organic LED (OLED). The lighting element may be used for lighting up a predefined area of a smartcard, for instance for illuminating a portion with a logo. Moreover, the lighting element may be used as an indicator of a working condition of the smartcard, for instance an indicator of a successful transaction of a smartcard.

Other non-limiting examples of loads that can be provided in the electrical devices according to the present invention are batteries for active smartcards, loudspeakers (even ultrasonic), buzzers, pumps, actuators, like electric engines, electromagnets, piezo devices (speakers or microvibration devices), heaters/coolers, or the like.

In general, any electrical consumer suitable for DC voltage can be provided as electrical load in the electrical devices for smartcards according to the present invention.

In the configuration of Fig. 1A, the two EH antennas 102 and 104 are concentric with each other. The first antenna 102 is the innermost antenna and the second antenna 104 is the outermost antenna. Preferably, the first antenna 102 comprises two winding loops. However, it is to be understood that this configuration is not limiting and that the first antenna 102 may include one, three, four or more winding loops. Preferably, the second antenna 104 comprises two winding loops. However, it is to be understood that this configuration is not limiting and that the second antenna 104 may include one, three, four or more winding loops.

In the configuration of Fig. 1A, the first and second antennas 102 and 104 have the same winding direction, that is an anti-clockwise winding direction when considering as starting points the points S2 and S4. S2 is the outermost point of the first antenna 102 connected to the terminal portion 102B. S4 is the outermost point of the second antenna 104 connected to the terminal portion 104A.

In the configurations of Figs. 1A and 1B the first diode 202 and the second diode 204 have the same direction of the forward current, i.e. directed from the lower part of the page towards the upper part of the page.

In an alternative configuration (not shown), a surface of the electronic carrier 100 may comprise two parts, for instance two symmetric parts, and each of the two EH antennas 102 and 104 may be formed on one part of the electronic carrier 100.

As shown in Fig. 1A, the EH antenna 102 is connected to two terminal portions or wires 102A and 102B. The terminal portion 102A is connected to the diode 202. In a similar way, the EH antenna 104 is connected to two terminal portions or wires 104A and 104B. The terminal portion 104A is connected to the diode 204. In this way, the electronic carrier 100 is provided with a first electronic circuit comprising a first EH antenna 102 and a first diode 202, and with a second electronic circuit comprising a second EH antenna 104 and a second diode 204.

During use of the electric carrier 100, a write/read electro-magnetic device is used to generate a alternating magnetic field B, i.e. a magnetic field B fields whose amplitudes vary in time with a periodic phase. According to known principles of physics, any change in the magnetic flux of the alternating magnetic field B over an area generates an electric field strength, whose effect depends upon the material properties of the surrounding area. If the variation of the magnetic flux is associated with an almost closed conductor loop, then an open-circuit voltage or induced voltage builds up across the ends of the almost closed conductor loop. Accordingly, an induced current and an induced alternating magnetic are associated with the conductor loop.

Therefore, when the electronic carrier 100 is exposed to an alternating magnetic field B of a Radio Frequency Identification Device (RFID) reader, a current signal and hence a voltage signal are induced in each of the two EH antennas 102 and 104. The voltage signal can be used to provide the power supply to the electrical load 210. Preferably, the two EH antennas 102 and 104 have similar dimensions, so that the induced voltage generated in the EH antenna 102 is similar to the induced voltage generated in the EH antenna 104 (i.e. same frequency and an amplitude ratio comprised between 100:1 and 1:100.)

The induced current may be a sinusoidal current with a positive part and a negative part. Therefore, a rectifier system such as a single diode or a bridge diode is necessary to rectify the induced sinusoidal current. However, both these solutions cause a significant energy loss. For example, when the sinusoidal current enters a single diode, one part of the signal, e.g. its negative part, is blocked, because a diode allows current to flow in only one direction. Hence, the sinusoidal signal is rectified, but the negative part of the sinusoidal current is lost. On the other hand, the energy loss of a bridge diode is at least twice the forward voltage drop of a single diode, because the input current to be rectified needs to pass through two diodes.

The present invention is based on the use of two electronic circuits with two independent diodes and it allows reducing this energy loss.

In the following disclosure, the working principle of the present invention is described by considering two components of the induced alternating magnetic field Bi having opposite phases, i.e. a first component Bi1 and a second component Bi2. As schematically indicated in the figures, the first component Bi1 is deemed to be entering the area defined by the first wire antenna 102 and/or by the second wire antenna 104, whereas the second component Bi2 is deemed to be exiting the area defined by the first wire antenna 102 and/or by the second wire antenna 104.

Fig. 1A schematically illustrates the situation wherein the induced current i1 flows in a clockwise direction in the EH antennas 102, 104 of the electronic carrier 100 and the associated magnetic field component Bi1 is directed towards the inside of the page (as defined by the right hand rule).

When the current flowing in the terminal part 102A of the first antenna 102 passes through the diode 202, it is blocked, because the forward direction of the diode 202 is opposite to the flow direction of the current (as schematically indicated by the crossed arrow). Therefore, there is no current flowing in the first circuit and the electrical load 210 is not powered up by the first antenna 102.

When the current flowing in the terminal part 104A of the second antenna 104 passes through the diode 204, it can only go in one direction, i.e. the direction indicated by the arrow in Fig. 1A. Since the forward direction of the diode 204 and the direction of the induced current are the same, the induced current flows through diode 204, then flows through the wire 108 and reaches the negative pole of the electrical load 210. Hence, the current of the antenna 104 powers up the electrical load 210. The induced current then follows the winding direction of the antenna 104 and flows through the wire 106 and the terminal portion 104B. In this way, the positive part of the sinusoidal voltage associated to the second antenna 104 contributes to the output voltage powering up the electrical load 210.

As schematically indicated in Figs. 1A and 1B, there is no electrical connection between the wires 106 and 108 in points E and F, hence the current cannot flow between the two wires in these points. The wire 106 is connected to the wire 104B in point G, so that the current of the second antenna 104 can flow from wire 106 to wire 104B, after having powered up the electrical load 210. The wire 108 is connected to the wire 102A in point D, so that the current can flow from the wire 102A to the wire 108, as described below with reference to Fig. 1B.

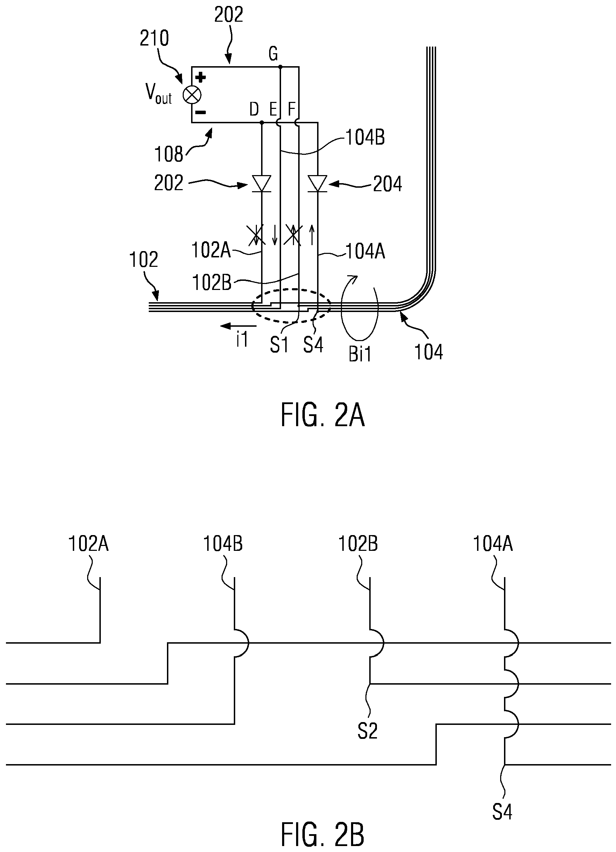

The configuration of the first and second diodes 202 and 204 positioned on the first and second antennas 102, 104, and of the corresponding induced current i1 is shown in more detail in Fig. 2A. Fig. 2B schematically illustrates a detail of the antennas of the embodiment of Fig. 2A, wherein the starting points S2 and S4 of the antennas 102 and 104 are clearly visible.

Fig. 1B schematically illustrates the situation wherein the induced current i2 flows in an anti-clockwise direction in the EH antennas 102, 104 of the electronic carrier 100 and the associated magnetic field component Bi2 is directed towards the outside of the page (as defined by the right hand rule).

When the induced current flowing in the terminal part 102A of the first antenna 102 passes through the diode 202, it can only go in one direction, i.e. the direction indicated by the arrow in Fig. 1B. The current coming out of the diode 202 flows through the wire 108 and reaches the electrical load 210. Since the forward direction of the diode 202 and the direction of the induced current are the same, the induced current flows through the diode 202, then flows through the wire 108 and reaches the negative pole of the electrical load 210. Hence, the current of the antenna 102 powers up the electrical load 210. The induced current then follows the winding direction of the antenna 102 and flows through the wire 106 and the terminal portion 102B. In this way, the positive part of the sinusoidal voltage associated with the first antenna 102 contributes to the output voltage Vₒᵤₜ powering up the electrical load 210.

When the current flowing in the terminal part 104A of the second antenna 104 passes through the diode 204, it can only go in one direction. Since the forward direction of the diode 204 is opposite to the flow direction of the current (as schematically indicated by the crossed arrow), the current of the terminal part 104A is blocked and cannot be used to power up the electrical load 210.

Since the induced alternating magnetic field Bi associated with the alternating magnetic field B generated by the write/read device is characterized by an alternation of the first component Bi1 and the second component Bi2, the situations described with reference to Figs. 1A and 1B alternately occur during use of the electronic carrier 100 in the magnetic field B. In the situation shown in Fig. 1A, the positive part of the induced sinusoidal current (or voltage) of the terminal portion 104A of the second antenna 104 contributes to the output signal Vₒᵤₜ for powering up the electrical load 210, whereas, in the situation shown in Fig. 1B, the positive part of the induced sinusoidal current (or voltage) of the terminal portion 102A of the first antenna 102 contributes to the output signal Vₒᵤₜ. Therefore, the output voltage Vₒᵤₜ for the electrical load 210 is alternately generated by the second antenna 104 and the first antenna 102, depending on the direction of the induced alternating magnetic field Bi1 or Bi2 and of the associated induced current i1 or i2.

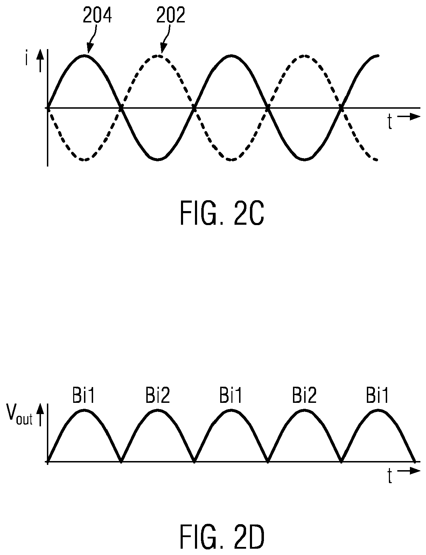

Fig. 2C schematically illustrates an example of the induced current entering the first diode 202 (see dotted line) and the second diode 204 (continuous line) in the configuration of Fig. 2A.

An example of an output voltage signal Vₒᵤₜ that can be obtained with the electronic carrier comprising two electronic circuits according to the present invention, after exposure to an alternating magnetic field, is schematically illustrated in Fig. 2D. The output voltage signal Vₒᵤₜ is a positive signal with constant polarity and it represents a rectified signal that can be used to power up the electrical load 210. As schematically shown in Fig. 2D, each half-wave of the output voltage Vₒᵤₜ derives from an induced voltage signal alternately generated by the first component and the second component of the alternating magnetic field.

It is to be understood that, even if the configurations of Figs. 1A and 1B show that the first diode 202 is placed on the terminal portion 102A of the first antenna 102 and the second diode 204 is placed on the terminal portion 104A of the second antenna, other configurations would be also possible, wherein the first diode 202 is placed on the terminal portion 102B of the first antenna 102 and the second diode 204 is placed on the terminal portion 104B of the second antenna 104. Depending on the position of the diode 202 or 204 close to the start S2, S4 of the antenna or opposite to it, the induced current i1 or i2 may be blocked at the beginning or at the end of its flow path. In these alternative configurations (not shown), the underlying physical principles are the same and the output voltage Vₒᵤₜ does not change. In other words, regardless of the position of the diode 202 at the start or at the end of the first antenna 102, if the induced current i1 or i2 of the first circuit is blocked by the diode 202 because of the opposite forward bias, there is no current associated with the first circuit for a given direction of the induced magnetic field component and the electrical load 210 is powered up by the second circuit. In a similar way, regardless of the position of the diode 204 at the start or at the end of the second antenna 104, if the induced current i1 or i2 of the second circuit is blocked by the diode 204 because of the opposite forward bias, there is no current associated with the second circuit for a given direction of the induced magnetic field component and the electrical load 210 is powered up by the first circuit.

The electronic carrier 100 comprises a main body 101 made of plastic, such as PVC, or any other non-conductive material, which forms the substrate for the antennas. The electronic carrier 100 can comprise a cutout portion (not shown) configured to accommodate the electrical load 210.

The EH antennas 102, 104 may be wire antennas and they may be made by means of wire embedding or air coil technology. The wire may be isolated and it may be made of copper, aluminum, and/or metal alloys with low specific electrical resistance. The advantage of realizing the antennas by means of wire embedding technology is that there is more flexibility in the antenna designs and that production costs are reduced. Alternatively, the EH antennas 102, 104 may be made by using any other antenna production technology, like etching, printing, laser-cut, milling, die-cut, and the like.

According to a preferred embodiment, the EH antennas 102 and 104 may be HF antennas. Preferably, the resonance frequency of the whole system of EH antenna 102, 104 is comprised in range between 5MHz and 30MHz.

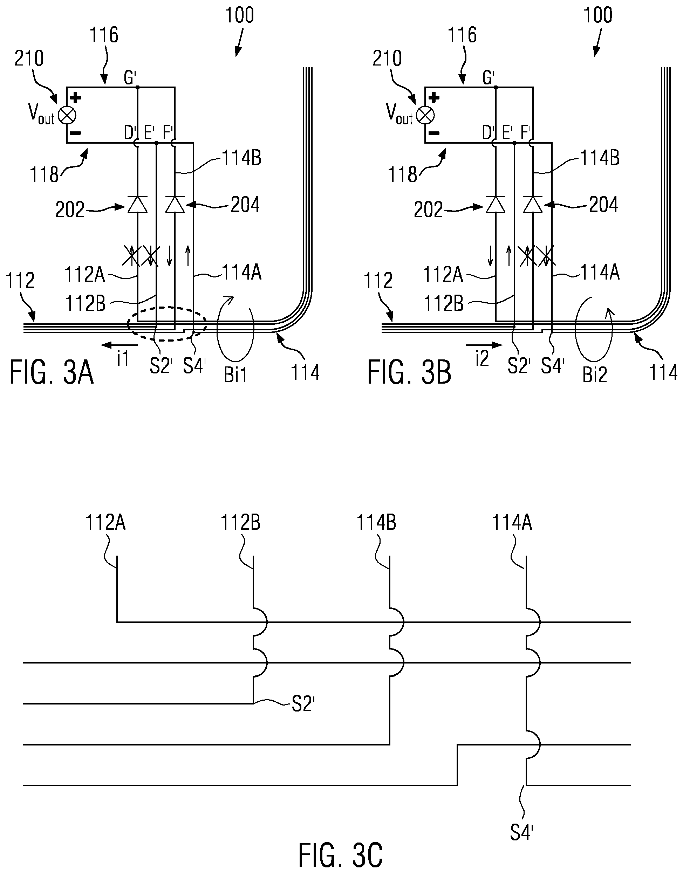

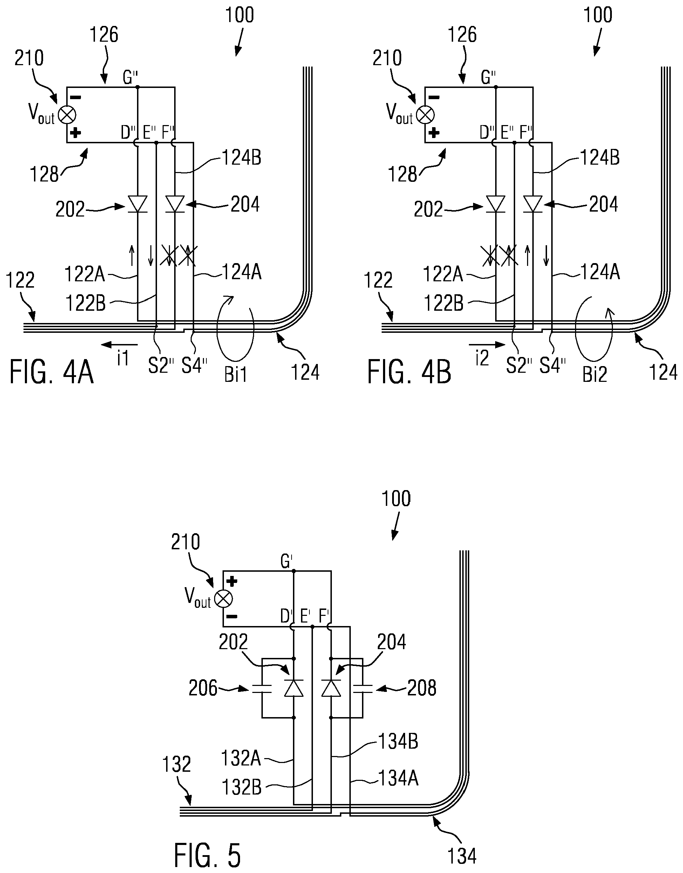

Figures 3A, 3B, 4A and 4B schematically illustrates different configurations of the electronic carrier 100 comprising two independent circuits, wherein the positions of the first and second diodes and the winding direction of the first and second antennas are modified. The output voltage Vₒᵤₜ generated by the electronic circuits shown in Figs. 3A, 3B, 4A and 4B is the same as shown in Fig. 2B with reference to the circuits of Figs. 1A and 1B, since the underlying physical principles are the same.

In Figures 3A, 3B, 4A and 4B, the first antennas 112 and 122 and the second antennas 114 and 124 correspond, respectively, to the first and second antennas 102 and 104 of the configurations of Figs. 1A and 1B. In these figures, the two EH antennas (i.e. antennas 112 and 114 and antennas 122 and 124) are concentric with each other. The first antenna 112 or 122 is the innermost antenna and the second antenna 114 or 124 is the outermost antenna.

Moreover, the wires 116, 118, 126 and 128 of Figs. 3A, 3B, 4A and 4B correspond, respectively, to the wires 106 and 108 of Figs. 1A and 1B.

In the configurations of Figs. 3A and 3B, the first and second antennas 112 and 114 have opposite winding directions. In particular, in the configurations of Figs. 3A and 3B, the first antenna 112 is wound in a clockwise way with respect to the starting point S2' and the second antenna 114 is wound in an anti- clockwise way with respect to the starting point S4'. S2' is the outermost point of the first antenna 112 connected to the terminal portion 112B. S4' is the outermost point of the second antenna 114 connected to the terminal portion 114A.

In the configuration of Figs. 3A and 3B the first diode 202 and the second diode 204 have the same forward bias direction, i.e. directed from the upper part of the page toward the lower part of the page.

Fig. 3A schematically illustrates the situation wherein the induced current i1 flows in a clockwise direction in the EH antennas 112, 114 of the electronic carrier 100 and the associated magnetic field component Bi1 is directed towards the inside of the area defined by the antennas 112 and 114 (as defined by the right hand rule).

When the induced current flowing in the terminal part 112A of the first antenna 112 passes through the diode 202, it is blocked, because the forward current direction of the diode 202 is opposite to the flow direction of the current (as schematically indicated by the crossed arrow). Therefore, the current of the terminal part 112A cannot be used to power up the electrical load 210 and there is no current flowing in the first circuit.

With regard to the second circuit, the induced current i1 flows through the terminal portion 114A of the second antenna 104 and through the wire 118 and reaches the negative terminal of the electrical load 210. The current i1 then flows through the wire 116 and finally reaches the end terminal portion 114B comprising the diode 204. When the current flowing in the terminal part 114B passes through the diode 204, it can only go in one direction, i.e. the direction indicated by the arrow in Fig. 3A. Since the forward direction of the diode 204 and the direction of the induced current are the same, the induced current flows through diode 204 and then again through the antenna 114. In this way, there is a current associated with the second circuit, which can power up the electrical load 210. In other words, the positive part of the sinusoidal voltage associated to the second antenna 114 contributes to the output voltage powering up the electrical load 210.

As schematically indicated in Figs. 3A and 3B, there is no electrical connection between the wires 116 and 118 in points D' and F', to avoid current shortcuts. The wire 116 is electrically connected to the wire 112A in point G', so that current can flow from the wire 116 to the wire 112A, as described below with reference to Fig. 3B. The wire 118 is electrically connected to the wire 112B in point E', so that current can flow from the wire 112B to the wire 118.

Fig. 3B schematically illustrates the situation wherein the induced current i2 flows in an anti-clockwise direction in the EH antennas 112, 114 of the electronic carrier 100 and the associated magnetic field component Bi2 is directed towards the outside of the area defined by the antennas 112 and 114 (as defined by the right hand rule).

With regard to the first electronic circuit, the induced current i2 flows through the terminal portion 112B of the first antenna 112 and through the wire 118 and reaches the negative terminal of the electrical load 210. The current i2 then flows through the wire 116 and finally reaches the end terminal portion 112A of the first antenna 112 comprising the diode 202. When the induced current flowing in the terminal part 112A of the first antenna 112 passes through the diode 202, it can only go in one direction, i.e. the direction indicated by the arrow in Fig. 3B. Hence, there is a current associated with the first circuit, which can be used to power up the electrical load 210. In other words, the positive part of the sinusoidal voltage associated with the first antenna 112 contributes to the output voltage Vₒᵤₜ powering up the electrical load 210.

When the current flowing in the terminal part 114B of the second antenna 114 passes through the diode 204, it can only go in one direction. Since the forward current direction of the diode 204 is opposite to the flow direction of the current (as schematically indicated by the crossed arrow), the current of the terminal part 114B is blocked and cannot be used to power up the electrical load 210.

It is to be understood that, even if the configurations of Figs. 3A and 3B show that the first diode 202 is placed on the terminal portion 112A of the first antenna 112 and the second diode 204 is placed on the terminal portion 114B of the second antenna 114, other configurations would be also possible, wherein the first diode 202 is placed on the terminal portion 112B of the first antenna 112 and/or the second diode 204 is placed on the terminal portion 114A of the second antenna 114. In these alternative configurations (not shown), the underlying physical principles are the same and the output signal doesn't change.

Fig. 3C schematically illustrates a detail of the antennas of the embodiment of Fig. 3A and 3B, wherein the starting points S2' and S4" of the antennas 112 and 114 are clearly visible.

Figs. 4A and 4B schematically illustrate a configuration of the electronic carrier 100, wherein the first antenna 122 and the second antenna 124 are wound in opposite directions. In particular, in the configurations of Figs. 4A and 4B, the first antenna 122 is wound in a clockwise way with respect to the starting point S2" and the second antenna 124 is wound in an anti-clockwise way with respect to the starting point S4". S2" is the outermost point of the first antenna 122 connected to the terminal portion 122B. S4" is the outermost point of the second antenna 124 connected to the terminal portion 124A. The configuration of the antennas 122 and 124 in correspondence of the starting points S2" and S4" is the same as the configuration of the antennas 112 and 114, which is shown in detail in Fig. 3C.

In the configuration of Figs. 4A and 4B the first diode 202 and the second diode 204 have the same forward direction, i.e. directed from the lower part of the page toward the upper part of the page.

Fig. 4A schematically illustrates the situation wherein the induced current i1 flows in a clockwise direction in the EH antennas 122, 124 of the electronic carrier 100 and the associated magnetic field component Bi1 is directed towards the inside of the area defined by the antennas 122 and 124 (as defined by the right hand rule).

When the current flowing in the terminal part 122A of the first antenna 122 passes through the diode 202, it can only go in one direction, i.e. the direction indicated by the arrow in Fig. 4A. Since the forward direction of the diode 202 and the direction of the induced current are the same, the induced current flows through diode 202, then flows through the wire 128 and reaches the negative pole of the electrical load 210. Hence, the current of the antenna 122 powers up the electrical load 210. The induced current then follows the winding direction of the antenna 122 and flows through the wire 126 and the terminal portion 122B. In this way, the positive part of the sinusoidal voltage associated to the first antenna 122 contributes to the output voltage powering up the electrical load 210.

With regard to the second electronic circuit, the induced current flows through the terminal portion 124A, through wires 126 and 128 and then reaches the terminal portion 124B comprising the diode 204. When the current passes through the diode 204, it is blocked, because the forward direction of the diode 204 is opposite to the flow direction of the current (as schematically indicated by the crossed arrow). Therefore, there is no current associated with the second circuit and the electrical load 210 is not powered up.

As schematically indicated in Figs. 4A and 4B, there is no electrical connection between the wires 126 and 128 in points D" and F", in order to avoid current shortcuts. The wire 126 is electrically connected to the wire 122A in point G", so that current can flow from the wire 126 to the wire 122A for powering up the electrical load 210. The wire 128 is electrically connected to the wire 122B in point E", so that current can flow from the wire 128 to the wire 122B after powering up the electrical load 210.

Fig. 4B schematically illustrates the situation wherein the induced current i2 flows in an anti-clockwise direction in the EH antennas 122, 124 of the electronic carrier 100 and the associated magnetic field component Bi2 is directed towards the outside of the area defined by the antennas 122 and 124 (as defined by the right hand rule).

With regard to the first electronic circuit, the induced current flows through the terminal portion 122B, through wires 126 and 128 and then reaches the terminal portion 122A comprising the diode 202. When the current passes through the diode 202, it is blocked, because the forward direction of the diode 202 is opposite to the flow direction of the current (as schematically indicated by the crossed arrow). Therefore, there is no induced current flowing in the first electronic circuit and the electrical load 210 is not powered up.

With regard to the second electronic circuit, the induced current flowing in the terminal part 124B of the second antenna 124 passes through the diode 204 and it flows in the direction indicated by the arrow in Fig. 4B. The current coming out of the diode 204 then flows through the wire 126 and reaches the negative terminal of the electrical load 210. Hence, the current of the antenna 124 powers up the electrical load 210. The induced current then follows the winding direction of the antenna 124 and flows through the wire 128 and the terminal portion 124A. In this way, the positive part of the sinusoidal voltage associated with the second antenna 124 contributes to the output voltage Vₒᵤₜ powering up the electrical load 210.

It is to be understood that, even if the configurations of Figs. 4A and 4B show that the first diode 202 is placed on the terminal portion 122A of the first antenna 122 and the second diode 204 is placed on the terminal portion 124B of the second antenna 124, other configurations would be also possible, wherein the first diode 202 is placed on the terminal portion 122B of the first antenna 122 and/or the second diode 204 is placed on the terminal portion 124A of the second antenna 124. In these alternative configurations (not shown), the underlying physical principles are the same and the output signal is the same.

Fig. 5 schematically illustrates a preferred embodiment of the present invention, wherein the first electronic circuit further includes a first capacitor 206 connected in parallel with the first diode 202 and the second electronic circuit further includes a second capacitor 208 connected in parallel with the second diode 204. The winding direction of the antennas and the position of the diodes are the same as shown in the circuits of Figs. 3A and 3B.

Thanks to the capacitor discharge process, the first capacitor 206 and the second capacitor 208 can be used for smoothing and further rectifying the output signal Vₒᵤₜ of the first electronic circuit and of the second electronic circuit, respectively. Moreover, the task of the first and second capacitors 206 and 208, which are connected in parallel to the corresponding diodes 202 and 204, is that of adjusting the resonance frequency of the individual resonant circuits (i.e. the first and second antennas 102 and 104), as well as of the overall system. The resonance frequency needs to be precisely tuned in order to be able to use as much energy as possible from the magnetic field change for current induction. As described above, the frequency can be set to a range "near" the reader frequency in the range between 5MHz and 30MHz. This is necessary in order to have adjustment options for a later completion with an additional EMV antenna for payment applications or other RFID functions.

Moreover, according to a preferred embodiment of the present invention (not shown in the Figures), it is possible to add an additional capacitor in parallel with the load, in order to smooth the voltage of the load.

It is to be understood that, even if in the configurations of Figs. 1A, 1B, 3A, 3B, 4A and 4B it has been always shown that the first diode 202 and the second diode 204 are placed on the terminal portions of the first and second antennas, respectively, each diode could be placed in any position along the length of the corresponding antenna and the principle would still work.

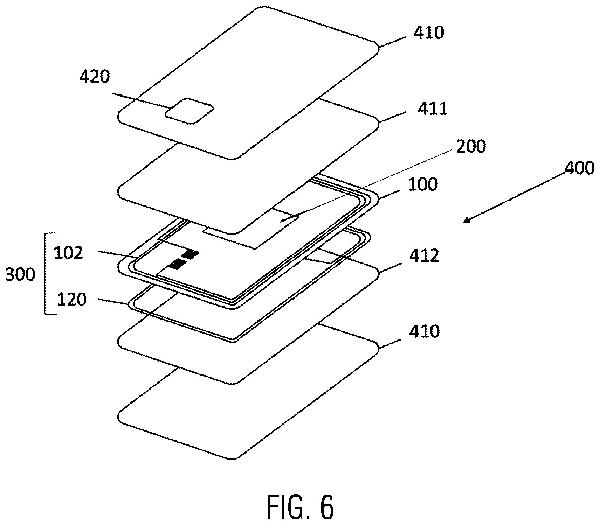

Fig. 6 schematically illustrates a three-dimensional view of a card-body 400 for a smartcard according to an embodiment of the present invention.

The card-body 400 comprises a pre-laminated structure 300, which includes the electronic carrier 100 for the antennas and the electrical load 210.

The electronic carrier 100 may be laminated to additional layers 120 to form a pre-laminated structure or pre-lam 300. The pre-laminated structure 300 indicates a preliminary structure comprising a plurality of layers connected to each other by means of a hot lamination process prior to incorporation of the external layers of the smartcard.

The card-body 400 of Fig. 6 further includes a front layer 411, including a translucent foil with printed elements, and a back layer 412, including a colored foil, for instance a white foil, with printed elements. Furthermore, the card-body 400 includes a top and a bottom overlays 410. A cavity is formed into the card-body 400 in order to accommodate the ISO module 420 with the ID payment chip. For instance, the cavity may be formed by milling. The ISO module 420 may be visible from the top overlay 410.

It is to be understood that, even if, in the present disclosure, an electronic carrier for antennas for a smartcard has been described, the same principles disclosed for the electronic carrier apply to any rectifying electronic circuit comprising two antennas with corresponding diodes in the configurations described above. Therefore, the present invention is not limited to an electronic carrier for antennas for a smartcard, but it refers to any rectifying electronic circuit with the features of claim 1.

### REFERENCES

100: electronic carrier
102, 112, 122, 132: first EH antenna
102A, 112A, 122A, 132A: first end of first EH antenna
102B, 112B, 122B, 132B: second end of first EH antenna
104, 114, 124, 134: second EH antenna
104A, 114A, 124A, 134A: first end of second EH antenna
104B, 114B, 124B, 134B: second end of second EH antenna
106, 116, 126: first connecting wire
108, 118, 128: second connecting wire
120: layer of the electronic carrier
202: first diode
204: second diode
206: first capacitor
208: second capacitor
210: electrical load
211: lighting element
250: active device
300: pre-laminated structure
400: card-body for a smart card
410: overlay
411: front layer
412: back layer
420: ISO module
H1: first direction of electro-magnetic field
H2: second direction of electro-magnetic field
D, E, F, G, D', E', F', G', D", E", F", G": contact points

## Claims

1. An electronic carrier (100) for antennas for a smartcard provided with a rectifier system for rectifying an electro-magnetic signal comprising:
- a first electronic circuit comprising a first wire antenna (102) configured to provide energy to an electrical load (210) and a first diode (202) connected to said first wire antenna (102), said first diode (202) having a first forward bias;
- a second electronic circuit comprising a second wire antenna (104) configured to provide energy to said electrical load (210) and a second diode (204) connected to said second wire antenna (104), said second diode (204) having a second forward bias;
wherein an induced current is generated in said first wire antenna (102) and in said second wire antenna (104) when the first and second antennas are exposed to an alternating magnetic field,
**characterized in that** said first diode (202) and said second diode (204) are positioned on the corresponding electronic circuit in such a way that, given a predefined direction of said alternating magnetic field, only one of said first diode (202) or said second diode (204) has a forward bias that allows flowing of said induced current, so that said induced current is allowed to flow alternatively through said first electronic circuit or through said second electronic circuit to provide energy to said electrical load (210).

2. The electronic carrier (100) for antennas for a smartcard of claim 1, wherein said first diode (202) and said second diode (204) are positioned on the corresponding electronic circuit in such a way that by alternating said alternating magnetic field between said predefined direction and the opposite direction, said induced current is allowed to flow alternately through said first electronic circuit and through said second electronic circuit to provide energy to said electrical load (210).

3. The electronic carrier (100) for antennas for a smartcard of one of the previous claims, wherein said first wire antenna (102) and said second wire antenna (104) have the same winding direction and said first forward bias of said first diode (202) and said second forward bias of said second diode (204) have the same direction with respect to said electrical load (210).

4. The electronic carrier (100) for antennas for a smartcard of claim 1 or 2, wherein said first wire antenna (112, 122) and said second wire antenna (114, 124) have opposite winding directions and said first forward bias of said first diode (202) and said second forward bias of said second diode (204) have the same direction with respect to said electrical load (210).

5. The electronic carrier (100) for antennas for a smartcard of claim 4, wherein said first wire antenna (112) is positioned inside said second wire antenna (114) and said first wire antenna (112) has a clockwise winding direction with respect to a starting point (S2') defined as the outermost point of said first wire antenna (112), and said second antenna (114) has an anti-clockwise winding direction with respect to a starting point (S4') defined as the outermost point of said second wire antenna (114).

6. The electronic carrier (100) for antennas for a smartcard according to any one of previous claims, wherein said first wire antenna (102) is positioned inside said second wire antenna (104), and
wherein said first diode (202) is placed on a terminal portion (102A) of said first antenna (102) opposite to a starting point (S2) of said first antenna (102) along a winding direction, and said second diode (204) is placed on a terminal portion (104A) of said second antenna (104) connected to a starting point (S4) of said second antenna (104),
said starting point (S2) of said first antenna (102) being defined as the outermost point of said first wire antenna (102) and said starting point (S4) of said second antenna (104) being defined as the outermost point of said second wire antenna (104).

7. The electronic carrier (100) for antennas for a smartcard according to any one of claims 1 to 5, wherein said first wire antenna (112, 122) is positioned inside said second wire antenna (114, 124), and
wherein said first diode (202) is placed on a terminal portion (112A, 122A) of said first antenna (112, 122) opposite to a starting point (S2', S2") of said first antenna (112, 122) along a winding direction, and said second diode (204) is placed on a terminal portion (114B, 124B) of said second antenna (114, 124) opposite to a starting point (S4', S4") of said second antenna (114, 124) along a winding direction,
said starting point (S2', S2") of said first antenna (112, 122) being defined as the outermost point of said first wire antenna (112, 122) and said starting point (S4', S4") of said second antenna (114, 124) being defined as the outermost point of said second wire antenna (114, 124).

8. The electronic carrier (100) for antennas for a smartcard according to any one of previous claims, wherein said first wire antenna (102) and said second wire antenna (104) are concentric with each other.

9. The electronic carrier (100) for antennas for a smartcard of any one of previous claims, wherein said first electronic circuit further comprises a first capacitor (206) connected in parallel with said first diode (202) in order to smooth the signal transmitted by said first diode (202) and to tune the resonance frequency of said first electronic circuit and of the total electronic circuit comprising said first electronic circuit and said second electronic circuit.

10. The electronic carrier (100) for antennas for a smartcard of any one of previous claims, wherein said second electronic circuit further comprises a second capacitor (208) connected in parallel with said second diode (204) in order to smooth the signal transmitted by said second diode (204) and to tune the resonance frequency of said second electronic circuit and of the total electronic circuit comprising said first electronic circuit and said second electronic circuit.

11. The electronic carrier (100) for antennas for a smartcard of any one of previous claims, wherein said first wire antenna (102) and/or said second wire antenna (104) comprise at least one loop, preferably two loops.

12. The electronic carrier (100) for antennas for a smartcard of any one of previous claims, wherein said first wire antenna (102) and/or said second wire antenna (104) are highfrequency antennas.

13. An electrical device (250) comprising:
- an electronic carrier for antennas for a smartcard according to any one of claims 1 to 12;
and
- an electrical load (210),
wherein said first antenna (102) and said second antenna (104) of said electronic carrier for antennas for a smartcard are configured to provide energy to said electrical load (210).

14. The electrical device (250) of claim 13, wherein said electrical load (210) is a lighting element (211), such as a Nano LED stamp, a LED array, a LED light guiding element including at least one LED as light source, or an Organic LED (OLED).

15. The electrical device (250) of claim 13, wherein said electrical load (210) is one of the following elements: a battery, a loudspeaker, for instance an ultrasonic loudspeaker, a buzzer, a pump, an actuator, for instance an electric engine, an electromagnet, a piezo device, for instance a speaker or a microvibration device, a heater, or a cooler.

16. A pre-laminated structure (300) for a smartcard comprising:
- an electrical device (250) of any one of claims 13 to 15; and
- an ISO module (420) for contactless and/or contact-based transactions.

17. A card-body for a smart card (400) comprising:
- a pre-laminated structure (300) according to claim 16;
- one or more printed layers (411, 412) comprising printed information;
- one or more overlays (410) superimposed on said one or more printed layers.

## Patentansprüche

1. Elektronischer Träger (100) für Antennen für eine Smartcard, der mit einem Gleichrichtersystem zum Gleichrichten eines elektromagnetischen Signals versehen ist, umfassend:
eine erste elektronische Schaltung, umfassend eine erste Drahtantenne (102), die dazu eingerichtet ist, einer elektrischen Last (210) Energie bereitzustellen, und eine erste Diode (202), die mit der ersten Drahtantenne (102) verbunden ist, wobei die erste Diode (202) eine erste Vorwärtspolung aufweist;
eine zweite elektronische Schaltung, umfassend eine zweite Drahtantenne (104), die dazu eingerichtet ist, der elektrischen Last (210) Energie bereitzustellen, und eine zweite Diode (204), die mit der zweiten Drahtantenne (104) verbunden ist, wobei die zweite Diode (204) eine zweite Vorwärtspolung aufweist;
wobei ein induzierter Strom in der ersten Drahtantenne (102) und in der zweiten Drahtantenne (104) erzeugt wird, wenn die erste und die zweite Antenne einem magnetischen Wechselfeld ausgesetzt sind,
**dadurch gekennzeichnet, dass** die erste Diode (202) und die zweite Diode (204) an der entsprechenden elektronischen Schaltung derart positioniert sind, dass bei einer vorgegebenen Richtung des magnetischen Wechselfeldes nur eine der ersten Diode (202) und der zweiten Diode (204) eine Vorwärtspolung aufweist, die das Fließen des induzierten Stroms ermöglicht, sodass dem induzierten Strom ermöglicht wird, alternativ durch die erste elektronische Schaltung oder durch die zweite elektronische Schaltung zu fließen, um der elektrischen Last (210) Energie bereitzustellen.

2. Elektronischer Träger (100) für Antennen für eine Smartcard nach Anspruch 1, wobei die erste Diode (202) und die zweite Diode (204) an der entsprechenden elektronischen Schaltung derart positioniert sind, dass durch Wechseln des magnetischen Wechselfeldes zwischen der vorgegebenen Richtung und der entgegengesetzten Richtung dem induzierten Strom ermöglicht wird, abwechselnd durch die erste elektronische Schaltung und durch die zweite elektronische Schaltung zu fließen, um der elektrischen Last (210) Energie bereitzustellen.

3. Elektronischer Träger (100) für Antennen für eine Smartcard nach einem der vorhergehenden Ansprüche, wobei die erste Drahtantenne (102) und die zweite Drahtantenne (104) dieselbe Wicklungsrichtung aufweisen und die erste Vorwärtspolung der ersten Diode (202) und die zweite Vorwärtspolung der zweiten Diode (204) in Bezug auf die elektrische Last (210) dieselbe Richtung aufweisen.

4. Elektronischer Träger (100) für Antennen für eine Smartcard nach Anspruch 1 oder 2, wobei die erste Drahtantenne (112, 122) und die zweite Drahtantenne (114, 124) entgegengesetzte Wicklungsrichtungen aufweisen und die erste Vorwärtspolung der ersten Diode (202) und die zweite Vorwärtspolung der zweiten Diode (204) in Bezug auf die elektrische Last (210) dieselbe Richtung aufweisen.

5. Elektronischer Träger (100) für Antennen für eine Smartcard nach Anspruch 4, wobei die erste Drahtantenne (112) innerhalb der zweiten Drahtantenne (114) positioniert ist und die erste Drahtantenne (112) in Bezug auf einen Startpunkt (S2'), der als der äußerste Punkt der ersten Drahtantenne (112) definiert ist, eine Wicklungsrichtung im Uhrzeigersinn aufweist, und die zweite Antenne (114) in Bezug auf einen Startpunkt (S4'), der als der äußerste Punkt der zweiten Drahtantenne (114) definiert ist, eine Wicklungsrichtung gegen den Uhrzeigersinn aufweist.

6. Elektronischer Träger (100) für Antennen für eine Smartcard nach einem der vorhergehenden Ansprüche, wobei die erste Drahtantenne (102) innerhalb der zweiten Drahtantenne (104) positioniert ist, und
wobei die erste Diode (202) an einem Endabschnitt (102A) der ersten Antenne (102), der einem Startpunkt (S2) der ersten Antenne (102) entlang einer Wicklungsrichtung gegenüberliegt, angeordnet ist, und die zweite Diode (204) an einem Endabschnitt (104A) der zweiten Antenne (104), der mit einem Startpunkt (S4) der zweiten Antenne (104) verbunden ist, angeordnet ist,
wobei der Startpunkt (S2) der ersten Antenne (102) als der äußerste Punkt der ersten Drahtantenne (102) definiert ist und der Startpunkt (S4) der zweiten Antenne (104) als der äußerste Punkt der zweiten Drahtantenne (104) definiert ist.

7. Elektronischer Träger (100) für Antennen für eine Smartcard nach einem der Ansprüche 1 bis 5, wobei die erste Drahtantenne (112, 122) innerhalb der zweiten Drahtantenne (114, 124) positioniert ist, und
wobei die erste Diode (202) an einem Endabschnitt (112A, 122A) der ersten Antenne (112, 122), der einem Startpunkt (S2', S2") der ersten Antenne (112, 122) entlang einer Wicklungsrichtung gegenüberliegt, angeordnet ist, und die zweite Diode (204) an einem Endabschnitt (114B, 124B) der zweiten Antenne (114, 124), der einem Startpunkt (S4', S4") der zweiten Antenne (114, 124) entlang einer Wicklungsrichtung gegenüberliegt, angeordnet ist,
wobei der Startpunkt (S2', S2") der ersten Antenne (112, 122) als der äußerste Punkt der ersten Drahtantenne (112, 122) definiert ist und der Startpunkt (S4', S4") der zweiten Antenne (114, 124) als der äußerste Punkt der zweiten Drahtantenne (114, 124) definiert ist.

8. Elektronischer Träger (100) für Antennen für eine Smartcard nach einem der vorhergehenden Ansprüche, wobei die erste Drahtantenne (102) und die zweite Drahtantenne (104) konzentrisch zueinander sind.

9. Elektronischer Träger (100) für Antennen für eine Smartcard nach einem der vorhergehenden Ansprüche, wobei die erste elektronische Schaltung ferner einen ersten Kondensator (206) umfasst, der parallel zu der ersten Diode (202) geschaltet ist, um das von der ersten Diode (202) übertragene Signal zu glätten und die Resonanzfrequenz der ersten elektronischen Schaltung und der gesamten elektronischen Schaltung, welche die erste elektronische Schaltung und die zweite elektronische Schaltung umfasst, abzustimmen.

10. Elektronischer Träger (100) für Antennen für eine Smartcard nach einem der vorhergehenden Ansprüche, wobei die zweite elektronische Schaltung ferner einen zweiten Kondensator (208) umfasst, der parallel zu der zweiten Diode (204) geschaltet ist, um das von der zweiten Diode (204) übertragene Signal zu glätten und die Resonanzfrequenz der zweiten elektronischen Schaltung und der gesamten elektronischen Schaltung, welche die erste elektronische Schaltung und die zweite elektronische Schaltung umfasst, abzustimmen.

11. Elektronischer Träger (100) für Antennen für eine Smartcard nach einem der vorhergehenden Ansprüche, wobei die erste Drahtantenne (102) und/oder die zweite Drahtantenne (104) mindestens eine Schleife, vorzugsweise zwei Schleifen, umfassen.

12. Elektronischer Träger (100) für Antennen für eine Smartcard nach einem der vorhergehenden Ansprüche, wobei die erste Drahtantenne (102) und/oder die zweite Drahtantenne (104) Hochfrequenzantennen sind.

13. Elektrische Vorrichtung (250), umfassend:
einen elektronischen Träger für Antennen für eine Smartcard nach einem der Ansprüche 1 bis 12; und
eine elektrische Last (210),
wobei die erste Antenne (102) und die zweite Antenne (104) des elektronischen Trägers für Antennen für eine Smartcard dazu eingerichtet sind, der elektrischen Last (210) Energie bereitzustellen.

14. Elektrische Vorrichtung (250) nach Anspruch 13, wobei die elektrische Last (210) ein Beleuchtungselement (211) ist, wie etwa ein Nano-LED-Stempel, eine LED-Anordnung, ein LED-Lichtleitelement, das mindestens eine LED als Lichtquelle umfasst, oder eine organische LED (OLED).

15. Elektrische Vorrichtung (250) nach Anspruch 13, wobei die elektrische Last (210) eines der folgenden Elemente ist: eine Batterie, ein Lautsprecher, beispielsweise ein Ultraschalllautsprecher, ein Summer, eine Pumpe, ein Aktuator, beispielsweise ein Elektromotor, ein Elektromagnet, eine piezoelektrische Vorrichtung, beispielsweise ein Lautsprecher oder eine Mikrovibrationsvorrichtung, eine Heizung oder ein Kühler.

16. Vorlaminierte Struktur (300) für eine Smartcard, umfassend:
eine elektrische Vorrichtung (250) nach einem der Ansprüche 13 bis 15; und
ein ISO-Modul (420) für kontaktlose und/oder kontaktbasierte Transaktionen.

17. Kartenkörper für eine Smartcard (400), umfassend:
eine vorlaminierte Struktur (300) nach Anspruch 16;
eine oder mehrere bedruckte Schichten (411, 412), die gedruckte Informationen umfassen;
eine oder mehrere Deckschichten (410), die der einen oder den mehreren bedruckten Schichten überlagert sind.

## Revendications

1. Support électronique (100) pour antennes pour une carte à puce, pourvu d'un système de redresseur permettant de redresser un signal électromagnétique, comprenant :
- un premier circuit électronique comprenant une première antenne filaire (102) configurée pour fournir de l'énergie à une charge électrique (210) et une première diode (202) reliée à ladite première antenne filaire (102), ladite première diode (202) ayant une première polarisation directe ;
- un second circuit électronique comprenant une seconde antenne filaire (104) configurée pour fournir de l'énergie à ladite charge électrique (210) et une seconde diode (204) reliée à ladite seconde antenne filaire (104), ladite seconde diode (204) ayant une seconde polarisation directe ;
dans lequel un courant induit est généré dans ladite première antenne filaire (102) et dans ladite seconde antenne filaire (104) lorsque les première et seconde antennes sont exposées à un champ magnétique alternatif,
**caractérisé en ce que** ladite première diode (202) et ladite seconde diode (204) sont positionnées sur le circuit électronique correspondant de telle sorte que, pour une direction prédéfinie dudit champ magnétique alternatif, seule l'une parmi ladite première diode (202) et ladite seconde diode (204) ait une polarisation directe qui permet la circulation dudit courant induit, de sorte que ledit courant induit soit autorisé à circuler alternativement à travers ledit premier circuit électronique ou à travers ledit second circuit électronique pour fournir de l'énergie à ladite charge électrique (210).

2. Support électronique (100) pour antennes pour une carte à puce selon la revendication 1, dans lequel ladite première diode (202) et ladite seconde diode (204) sont positionnées sur le circuit électronique correspondant de telle sorte qu'en alternant ledit champ magnétique alternatif entre ladite direction prédéfinie et la direction opposée, ledit courant induit soit autorisé à circuler alternativement à travers ledit premier circuit électronique et à travers ledit second circuit électronique pour fournir de l'énergie à ladite charge électrique (210).

3. Support électronique (100) pour antennes pour une carte à puce selon l'une des revendications précédentes, dans lequel ladite première antenne filaire (102) et ladite seconde antenne filaire (104) ont la même direction d'enroulement et ladite première polarisation directe de ladite première diode (202) et ladite seconde polarisation directe de ladite seconde diode (204) ont la même direction par rapport à ladite charge électrique (210).

4. Support électronique (100) pour antennes pour une carte à puce selon la revendication 1 ou 2, dans lequel ladite première antenne filaire (112, 122) et ladite seconde antenne filaire (114, 124) ont des directions d'enroulement opposées et ladite première polarisation directe de ladite première diode (202) et ladite seconde polarisation directe de ladite seconde diode (204) ont la même direction par rapport à ladite charge électrique (210).

5. Support électronique (100) pour antennes pour une carte à puce selon la revendication 4, dans lequel ladite première antenne filaire (112) est positionnée à l'intérieur de ladite seconde antenne filaire (114) et ladite première antenne filaire (112) présente une direction d'enroulement dans le sens des aiguilles d'une montre par rapport à un point de départ (S2') défini comme le point le plus extérieur de ladite première antenne filaire (112), et ladite seconde antenne (114) présente une direction d'enroulement dans le sens inverse des aiguilles d'une montre par rapport à un point de départ (S4') défini comme le point le plus extérieur de ladite seconde antenne filaire (114).

6. Support électronique (100) pour antennes pour une carte à puce selon l'une quelconque des revendications précédentes, dans lequel ladite première antenne filaire (102) est positionnée à l'intérieur de ladite seconde antenne filaire (104), et
dans lequel ladite première diode (202) est placée sur une partie terminale (102A) de ladite première antenne (102) opposée à un point de départ (S2) de ladite première antenne (102) le long d'une direction d'enroulement, et ladite seconde diode (204) est placée sur une partie terminale (104A) de ladite seconde antenne (104) reliée à un point de départ (S4) de ladite seconde antenne (104),
ledit point de départ (S2) de ladite première antenne (102) étant défini comme le point le plus extérieur de ladite première antenne filaire (102) et ledit point de départ (S4) de ladite seconde antenne (104) étant défini comme le point le plus extérieur de ladite seconde antenne filaire (104).

7. Support électronique (100) pour antennes pour une carte à puce selon l'une quelconque des revendications 1 à 5, dans lequel ladite première antenne filaire (112, 122) est positionnée à l'intérieur de ladite seconde antenne filaire (114, 124), et
dans lequel ladite première diode (202) est placée sur une partie terminale (112A, 122A) de ladite première antenne (112, 122) opposée à un point de départ (S2', S2") de ladite première antenne (112, 122) le long d'une direction d'enroulement, et ladite seconde diode (204) est placée sur une partie terminale (114B, 124B) de ladite seconde antenne (114, 124) opposée à un point de départ (S4', S4") de ladite seconde antenne (114, 124) le long d'une direction d'enroulement,
ledit point de départ (S2', S2") de ladite première antenne (112, 122) étant défini comme le point le plus extérieur de ladite première antenne filaire (112, 122) et ledit point de départ (S4', S4") de ladite seconde antenne (114, 124) étant défini comme le point le plus extérieur de ladite seconde antenne filaire (114, 124).

8. Support électronique (100) pour antennes pour une carte à puce selon l'une quelconque des revendications précédentes, dans lequel ladite première antenne filaire (102) et ladite seconde antenne filaire (104) sont concentriques l'une par rapport à l'autre.

9. Support électronique (100) pour antennes pour une carte à puce selon l'une quelconque des revendications précédentes, dans lequel ledit premier circuit électronique comprend en outre un premier condensateur (206) relié en parallèle avec ladite première diode (202) afin de lisser le signal transmis par ladite première diode (202) et d'accorder la fréquence de résonance dudit premier circuit électronique et du circuit électronique total comprenant ledit premier circuit électronique et ledit second circuit électronique.

10. Support électronique (100) pour antennes pour une carte à puce selon l'une quelconque des revendications précédentes, dans lequel ledit second circuit électronique comprend en outre un second condensateur (208) relié en parallèle avec ladite seconde diode (204) afin de lisser le signal transmis par ladite seconde diode (204) et d'accorder la fréquence de résonance dudit second circuit électronique et du circuit électronique total comprenant ledit premier circuit électronique et ledit second circuit électronique.

11. Support électronique (100) pour antennes pour une carte à puce selon l'une quelconque des revendications précédentes, dans lequel ladite première antenne filaire (102) et/ou ladite seconde antenne filaire (104) comprennent au moins une boucle, de préférence deux boucles.

12. Support électronique (100) pour antennes pour une carte à puce selon l'une quelconque des revendications précédentes, dans lequel ladite première antenne filaire (102) et/ou ladite seconde antenne filaire (104) sont des antennes haute fréquence.

13. Dispositif électrique (250) comprenant :
- un support électronique pour antennes pour une carte à puce selon l'une quelconque des revendications 1 à 12 ; et
- une charge électrique (210),
dans lequel ladite première antenne (102) et ladite seconde antenne (104) dudit support électronique pour antennes pour une carte à puce sont configurées pour fournir de l'énergie à ladite charge électrique (210).

14. Dispositif électrique (250) selon la revendication 13, dans lequel ladite charge électrique (210) est un élément d'éclairage (211), tel qu'un module Nano-LED, une matrice de LED, un élément de guidage de lumière à LED comprenant au moins une LED comme source lumineuse, ou une LED organique (OLED).

15. Dispositif électrique (250) selon la revendication 13, dans lequel ladite charge électrique (210) est l'un des éléments suivants : une batterie, un haut-parleur, par exemple un haut-parleur à ultrasons, un avertisseur sonore, une pompe, un actionneur, par exemple un moteur électrique, un électroaimant, un dispositif piézoélectrique, par exemple un haut-parleur ou un dispositif de micro-vibration, un élément chauffant ou un élément refroidissant.

16. Structure pré-stratifiée (300) pour carte à puce comprenant :
- un dispositif électrique (250) selon l'une quelconque des revendications 13 à 15 ; et
- un module ISO (420) pour des transactions sans contact et/ou avec contact.

17. Corps de carte pour carte à puce (400) comprenant :
- une structure pré-stratifiée (300) selon la revendication 16 ;
- une ou plusieurs couches imprimées (411, 412) comprenant des informations imprimées ;
- une ou plusieurs couches de recouvrement (410) superposées à ladite ou auxdites plusieurs couches imprimées.
